(19) Europäisches Patentamt / European Patent Office / Office européen des brevets

(11) **EP 3 671 467 A1**

(12) **EUROPEAN PATENT APPLICATION**

(43) Date of publication:
24.06.2020 Bulletin 2020/26

(51) Int Cl.:
*G06F 11/36* (2006.01)

(21) Application number: 18213693.7

(22) Date of filing: 18.12.2018

| | |
|---|---|
| (84) Designated Contracting States:<br>**AL AT BE BG CH CY CZ DE DK EE ES FI FR GB GR HR HU IE IS IT LI LT LU LV MC MK MT NL NO PL PT RO RS SE SI SK SM TR**<br>Designated Extension States:<br>**BA ME**<br>Designated Validation States:<br>**KH MA MD TN**<br><br>(71) Applicant: **KBC Groep NV**<br>**1080 Brussel (BE)** | (72) Inventors:<br>• **Byl, Frederik**<br>**3200 Aarschot (BE)**<br>• **Rotté, Thomas**<br>**3360 Bierbeek (BE)**<br><br>(74) Representative: **Brantsandpatents bvba**<br>**Pauline Van Pottelsberghelaan 24**<br>**9051 Ghent (BE)** |

(54) **GUI APPLICATION TESTING USING BOTS**

(57) The current invention relates to a computer-implemented method for testing an application comprising a graphical user interface, said method comprising the steps of: recording a plurality of sessions, each session comprising one or more user actions generated by a user while interacting with said application via said graphical user interface; clustering said plurality of sessions into a plurality of categories, thereby generating for each category a corresponding bot brain model comprising actions corresponding to nodes and edge probabilities ($\alpha$, $\beta$, $\gamma$, $\delta$) corresponding to directed edges; creating one or more bots, wherein each bot is associated with one of the bot brain models, and adding the bots to a bot population; repeatedly generating, for each bot belonging to said bot population, a sequence of bot interactions between the bot and the application.

EP 3 671 467 A1

**Description**

**Technical field**

The invention pertains to the technical field of automated testing of software applications by means of bots.

**Background**

There remains a need in the art for an improved way to test applications.

In a computerized system such as, for example, a bank application system, the graphical user interface is a kind of buffer between a user and the underlying system that does the work, such as receiving details of transfer transactions, executing the transaction and so forth. Thus, the graphical interface is what the user, in this example the user of a bank application, sees on the screen in order to operate the bank application system.

Testing the graphical user interface involves testing that the functions of the underlying application work correctly, such as in the present example, performing transfer transactions correctly, and testing that the graphical display of all of that information is correct so that the user sees things in the right places on the screen and that when numbers are entered into the interface that the correct number goes into the application, that fields and notifications are put up in the right places and that they appear at the right time, that functionality provided via the user interfaces behaves as expected, and so forth.

One of the main problems in testing such systems results from the typically large number of possible ways to operate the system. Typically, there are a large number of different paths through the system that represent correct use of the system. Basically, testing must ensure that all of those paths work correctly; that is, it should ensure that the system will respond properly to any form of input stimulus. One of the biggest problems in testing is constructing enough test cases to be able to at least examine the operation of all these different possible ways.

Completely exhaustive testing of all modes is not feasible because there are too many possibilities. However, thorough testing is essential, yet the sheer magnitude of the job can be overwhelming. It is nevertheless desirable to come as close to that as may be practicable. Among various known strategies, typically, an attempt is made to group together similar kinds of operations and have a smaller number of representative tests that stand for essentially similar ways of using the system.

Known methods for testing GUIs use capture/replay tools, which permit the tester to record, and later play back, sequences of actions on the interface. The operator is enabled to work with a graphical interface and capture certain samples of executions and certain samples of using the interface. Such tools will typically capture the uses of the interface, they will store them, will store representations of those uses, and then allow the operator to replay those uses as test cases. Typically, such tools also enable viewing of the captured representations and the making of changes to the captured representations, so that variations can be created using the existing commercial tools.

However, this advantage raises a concomitant drawback: only a single sequence of actions can be recorded at one time. For thorough testing, some way of generalizing this input must be automated to make the testing feasible.

Another problem with the scripts recorded by a record/replay tool is keeping them current as the tested application changes. While some record/replay tools can handle certain simple kinds of changes to the tested system, changes in the layout of the interface may invalidate many existing test scripts, and require the tester either to edit the scripts, or to redevelop a new set of scripts from scratch.

EP 0 869 433 discloses an integrated, visual test design system and method for graphical user interface (GUI) software that links a test designer, a test design library, and a test generation engine with a standard commercial capture/replay tool. The system's components provide a human tester the capabilities to capture sequences of interactions with the software under test (SUT), to visually manipulate and modify the sequences, and to create test designs that represent multiple individual test sequences. These features are supported through an interface that gives the tester access to a user model of the SUT, with simulations of the windows of the software's GUI, and that displays graphical representations of recorded test sequences and test designs. However, EP 0 869 433 is difficult when it comes to managing concurrent tests.

P.A. Brooks and A.M. Memon, Automated GUI Testing Guided by Usage Profiles, Proceedings of the 22nd IEEE/ACM international conference on Automated software engineering (ASE 07), Atlanta, Georgia, USA, November 5-9, 2007, pages 333-342, hereafter Brooks (2007), discloses a new technique for testing of GUI applications. Information on the actual usage of the application, in the form of "usage profiles," is used to ensure that a new version of the application will function correctly. Usage profiles, sequences of events that end-users execute on a GUI, are used to develop a probabilistic usage model of the application. An algorithm uses the model to generate test cases that represent events the user is most likely to execute. Reverse engineering methods are used to extract the underlying structure of the application. However, Brooks (2007) does not disclose any means for running concurrent tests.

S. Herbold, Usage-based Testing for Event-driven Software, Doctoral Dissertation at the Mathematisch-Naturwissenschaftlichen Fakultäten of the Georg-August-Universität in Göttingen (2012), hereafter Herbold (2012), discloses an overview of prior art systems and methods for usage-based testing of event-driven software. Furthermore, Herbold (2012) discloses stochastic models with prediction by partial match for usage-based testing. However, Herbold (2012) does not disclose means for running concurrent tests.

The present invention aims to resolve at least some of the problems of managing concurrent tests.

**Summary of the invention**

The present invention provides a method according to claim 1.

The advantage of the invention lies in the efficient handling of concurrent tests. By generating a bot population in a unified framework, the invention efficiently addresses the technical problem of how to thoroughly test the vast number of possible ways to operate the system within a short time frame. Generating a bot population based on a plurality of categories created from clustering of incoming sessions has not been disclosed nor hinted upon in any of EP 0 869 433, Brooks (2007) and Herbold (2012). A fortiori, none of the cited documents discloses a method including said repeatedly generating, for each bot belonging to said bot population, a sequence of bot interactions between the bot and the application, whereby said repeatedly generating involves a probabilistic evaluation based on the edge probabilities ($\alpha$, $\beta$, $\gamma$, $\delta$) comprised in the bot brain model associated with said bot.

A further advantage in maintaining a bot population according to the present invention lies in the possibility of offering the invention as an automated "testing as a service" cloud solution. This allows application providers to have session data streamed, in a way that they deem possible, to the server that is responsible for the testing. Since the bot population may autonomously test the application as if it were human users, the application provider need not bother with further details of the testing, and may receive test reports upon request. Such a set-up is not suggested by any of EP 0 869 433, Brooks (2007) and Herbold (2012).

Further advantages include that one can translate the real user sessions on a system to a user behavior model that can be used to do bot executions on another system. Also, the invention can reduce the burden of so-called "business as usual testing". Furthermore, the invention allows indicating the quality of a specific environment, compared to a standard system. Finally, the invention preferably may generate data with the same properties as the original data, without being a copy of that data.

In a particularly preferred embodiment the method relates to updating based on recording a further session, according to claim 3.

Hereby, said difference may relate to said actions and edges. In an exemplary embodiment, this difference relates to counting the nodes and edges of the session that correspond with nodes and edges from the existing bot brain model, and identifying all actions present in the bot brain model but not present in the further session. Hereby, updating may e.g. relate to altering the bot brain model parameters so that those actions are less likely to be visited. An illustration hereof is given below in the examples. Such updating is advantageous in that it allows handling updates to the application interface and/or changed usage patterns from users. Such updating is not disclosed in any of the cited documents.

In a second aspect, the present invention provides a system according to claim 14.

In a third aspect, the invention offers a use of a method according to any one of claims 1 to 13 in a system according to any one of claims 14 and 15.

The advantages of the system and the use are similar to those of the method according to the present invention. Preferred embodiments and their advantages are discussed in the detailed description and in the examples.

**Description of figures**

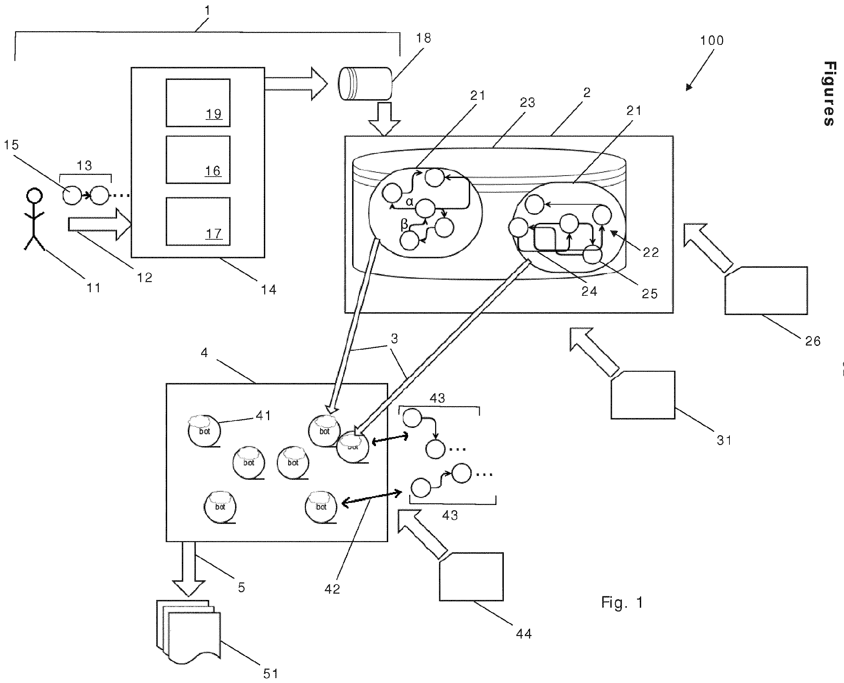

**Figure 1** illustrates an example architecture and workflow according to the present invention.

**Detailed description of the invention**

In this document, the term application may relate to any type of computer program available to the user via a graphical user interface. This may relate to an application running on a personal computer, an app executed on a mobile phone or tablet, or to a webform-based application running in the cloud.

In this document, the terms "category" and "cluster" are used interchangeably.

In general terms, the invention provides a user analytics system. The invention preferably takes user action data of a monitoring system as input and extracts user behavior out of it. Preferably, it can trigger and manage executions of representative user behavior on another environment.

The invention relates to a user analytics application which extracts user behavior from a system and can execute automatically representative behavior on another system. User action data is streamed to the invention and undergoes AI clustering. By means of this clustering the invention enables extracting user behavior and organizing it in different clusters. These clusters are the input of the automated testing. The invention allows selecting representative behavior as sequences of actions from the clustered data and injects it in bots. The invention enables to start a population of these bots, which target a specific environment and execute the injected actions on this environment.

The invention can be of practical value for instance for a web application that wants to automatically execute business as usual tests that represent the actions and dynamics that happen on their production environment. The client can stream production user actions logging to the invention (by means of implementing an appropriate input processing library) and connect their test environment with the invention and keep a bot population running. In the internal clusters of the invention there preferably is an aging mechanism which keeps the extracted user behavior up to date with the production environment. The invention allows that the test environment shows the same dynamics as the production environment of that application. Business as usual testing is done continuously, thus detecting failures resulted by changes very early in the chain.

The invention also preferably keeps track of the coverage of the tests that are executed with regards to the behavior. It gives a unique indication on how many successful tests compared to how many tests and how many actions are executed. This indication is effectively a number describing the quality of the test environment, because it tells something about the quality of the data and the quality of the application undergoing the tests.

In general terms, the relation between the category and its associated bot can be understood as follows. A category acts as the "brain" for a bot. A bot preferably is able to work independently with the information he/she received at creation time. From then on, it lives in the "botworld", and interacts with the application just like a human user would, until it dies. Bots preferably gather test results from what they are doing, the test results preferably comprising error messages, and unwanted behavior.

Bots are derived from clusters (or, equivalently, categories). If the cluster only contains data from one session, it will probably not be a valid basis for creating a bot, or the created bot will probably not exhibit desirable testing behavior that is sufficiently realistic. On the other hand, if a cluster contains all session data, there is no way to distinguish the types of bots, and they would all be equal, with common behavior. While the behavior across bots would not be identical due to the probabilistic evaluation involved in the generation of the sequences, this may still be undesirable for testing purposes since thorough testing probably requires more diversity in behavior.

In terms of testing, the bots are the real executors of the behavior on the test environment. Therefore, in a preferred embodiment, a human operator is provided with control over the bots: how many bots; what are they doing, what category, etc.

In a first aspect, the invention provides a method for testing an application comprising a graphical user interface. The method comprises the steps of:

- recording a plurality of sessions, each session comprising one or more user actions generated by a user while interacting with the application via the graphical user interface;
- clustering the plurality of sessions into a plurality of categories, thereby generating for each category a corresponding bot brain model comprising actions corresponding to nodes and edge probabilities ($\alpha$, $\beta$, $\gamma$, $\delta$) corresponding to directed edges;
- creating at least one bot, preferably at least two bots, wherein each bot is associated with one of the bot brain models;
- adding the at least one bot, preferably the at least two bots, to a bot population;
- repeatedly generating, for each bot belonging to the bot population, a sequence of bot interactions between the bot and the application, preferably via the graphical user interface,

wherein the sequence comprises at least a first action and a second action, and wherein the repeatedly generating of the sequence by the bot involves a probabilistic evaluation based on the edge probabilities of the bot brain model associated with the bot.

In a preferred embodiment of the invention, the probabilistic evaluation is based on the edge probability ($\alpha$, $\beta$, $\gamma$, $\delta$) of the directed edge leading from the first action to the second action as comprised in the bot brain model associated with the bot. This has the advantage of linking the edge probabilities immediately to the probabilistic evaluation. In one embodiment, the edges and nodes may relate to a Markov model, wherein the actions relate to Markov states, and the edge probabilities may relate e.g. to transition probabilities.

In a preferred embodiment, the invention relates to the further steps of:

- recording a further session comprising one or more user actions generated by a user while interacting with the application;
- assigning one of the plurality of categories to the further session based on a similarity between the further session and each of the bot brain models associated with the plurality of categories;
- determining a difference between the further session and the bot brain model of the assigned category;
- updating, based on the difference, the bot brain model of the assigned category;

- preferably, creating a further bot associated with the updated bot brain model and adding the further bot to the bot population.

In a preferred embodiment, the updating relates to an aging function applied to the edge probabilities ($\alpha$, $\beta$, $\gamma$, $\delta$), wherein the aging function is such that values of edge probabilities ($\alpha$, $\beta$, $\gamma$, $\delta$) of edges present in the further session are increased and/or is such that values of edge probabilities ($\alpha$, $\beta$, $\gamma$, $\delta$) of edges absent in the further session are decreased. This has the advantage of automatically adapting the bot brain models to changes and trends in the incoming further sessions.

In a preferred embodiment, the updating relates to an edge strength associated with each of the directed edges, an edge strength of an edge based on an unused-age counter of the edge and the edge probability of the edge, wherein the unused-age counter of an edge present in the further session is reset, wherein the unused-age counter of an edge absent in the further session is incremented, and wherein the updating comprises removing edges based on a comparison of the edge strength with a predetermined strength threshold. This has the advantage of automatically adapting the bot brain models to changes and trends in the incoming further sessions.

In a preferred embodiment, the step of repeatedly generating the sequence of bot interactions for each bot belonging to the bot population takes place also if the bot brain model corresponding to the bot is no longer in use for creating bots. This has the advantage of providing a more flexible system, allowing to move computing resources of the clustering to the execution of bot activity and vice versa depending on the operator's needs.

In a preferred embodiment, the repeatedly generating of a bot interaction comprises evaluating, for each bot, whether an expiry condition for the bot has been reached, wherein meeting the expiry condition corresponds to letting the bot die, wherein preferably the expiry condition relates to a difference between a bot brain model that is currently in use for creating bots and the bot brain model used for creating the bot. This difference may relate to the actions and edges. In one example embodiment, this difference may relate to a difference measure counting the nodes and edges of the session that correspond with nodes and edges from the existing bot brain model, and incrementing the difference measure for all actions present in the bot brain model but not present in the further session. Hereby, detecting that a difference becomes larger than a given difference threshold may be a trigger for letting the bot die. This has the advantage of partially decoupling the process of updating the categories and the actual testing activity performed by the bots. Rather than requiring strict adherence of bots to the most recently updated categories, a more loose relation is allowed. This leads to an agile approach with respect to updating and actual application of the updates to the bots.

In a preferred embodiment, the step of creating at least one bot comprises creating at least two bots of which at least two are created from the same corresponding bot brain model. The present invention hereby advantageously enables the creation of bot "clones" with the same "brain" with common behavior yet with non-identical actions due to the probabilistic evaluation inherent to the invention.

In a preferred embodiment, the step of creating at least one bot comprises creating at least two bots of which at least two are created from a different corresponding bot brain model. Hereby, the invention advantageously provides concurrently created bots with different behavior, allowing versatile and varied concurrent testing.

In a preferred embodiment, the bot population comprises at least five bots, preferably at least ten bots, more preferably at least twenty bots.

In a preferred embodiment, the step of clustering comprises the step of determining a similarity between a pair of sessions. Preferably, the similarity relates to the actions and edges. Preferably, determining the similarity between a pair of sessions comprises obtaining a numerical vector representation for each session of the pair; normalizing the numerical vector representations; determining a distance between the normalized numerical vector representations; and verifying a condition based on the computed distance and a predefined distance threshold.

In a preferred embodiment, the step of assigning one of the plurality of categories to the further session based on a similarity between the further session and each of the bot brain models associated with the plurality of categories comprises the steps of:

- obtaining a numerical vector representation, preferably normalized numerical vector representation, for the further session and each of the plurality of categories;
- computing a distance between the numerical vector representation of the further session and the numerical vector representation of each of the plurality of categories; and
- determining the category associated with a minimal computed distance over the plurality of categories.

Preferably, a condition based on the minimal computed distance and a predefined distance threshold is verified, and based on the verification a selection is made to either create a new category based on the further session, or to associate the further session with the determined category associated with the minimal distance. In this embodiment, only in case the further session is associated with the determined category associated with the minimal distance, the steps of determining a difference between the further session and the bot brain model of the assigned category and updating, based on the difference, the bot brain model of the assigned category are performed.

Therefore, in a preferred embodiment, the invention may relate to the further steps of:

- recording a further session comprising one or more user actions generated by a user while interacting with the application;
- obtaining a normalized numerical vector representation for the further session and a numerical vector representation for each of the plurality of categories;
- computing a distance between the numerical vector representation of the further session and the numerical vector representation of each of the plurality of categories;
- determining the category associated with a minimal computed distance over the plurality of categories;
- verifying a condition based on the minimal computed distance and a predefined distance threshold;
- selecting based on the verification to either create a new category based on the further session or to associate the further session with the determined category associated with the minimal distance;
- in case the further session is assigned with the determined category associated with the minimal distance:

  ○ determining a difference between the further session and the bot brain model of the assigned category;
  ○ updating, based on the difference, the bot brain model of the assigned category;

- preferably, creating a further bot associated with the updated bot brain model and adding the further bot to the bot population.

In a preferred embodiment, a numerical vector representation of a session is based on a number of occurrences of an action in the session.

In a preferred embodiment, a numerical vector representation of a session is based on a number of occurrences of a sequence of actions in the session.

In a preferred embodiment, a numerical vector representation of a session is based on a rank order of a parameter value associated with a parameter of an action in the session over multiple parameter values associated with the parameter of the action in the plurality of sessions. Preferably, the rank order is normalized with the total number of occurrences of the parameter of the action.

In a preferred embodiment, the method comprises the further steps of:

- repeatedly determining, for each bot belonging to the bot population and based on the sequence of bot interactions between the bot and the application, a test report for the bot;
- based on the test report, sending an alert to a human operator;

wherein the sending of the alert is preferably triggered by an error comprised in the test report. This has the advantage of providing automated testing feedback to the operator while the bots may remain active, leading to effective testing with reduced effort for the human operator.

In a preferred embodiment, the method comprises the further steps of:

- repeatedly determining a success rate for an action, preferably each action, preferably based on the test reports for the bot population;
- based on the success rate for the action, sending an alert to a human operator,

wherein the sending of the alert is preferably triggered by a sudden change in the success rate of the action. This has the advantage that the fixing of an issue or the introduction of an issue may be detected by the bot population, so that a particular change or set of changes in an application may be linked to the success rate change.

In a second aspect, the present invention provides a system for testing an application comprising a graphical user interface. The system comprises a server and at least one user device. The server comprises memory, a processor, and program code on the memory for instructing the processor. A user device comprises memory, a processor, and program code on the memory for instructing the processor. The at least on user device is configured for executing the application. The execution comprises interaction between a user of the user device and the application via the graphical user interface of the application. The execution comprises sending a session comprising one or more user actions generated during the interaction to the server. The server is configured for receiving a plurality of sessions from the at least one user device, and performing the steps of a method according to the first aspect of the present invention.

In a preferred embodiment, the system further comprises an application server different from the server, wherein the application server comprises memory, a processor, and program code on the memory for instructing the processor. In this embodiment, the execution comprises sending the session to the application server for executing the application.

In this embodiment, the application server is configured for sensing the session comprising one or more user actions generated during the interaction to the server.

This has the advantage that the testing is performed even more independently from the operation of the application, allowing a "testing as a service" approach to application testing.

The invention is further described by the following non-limiting examples which further illustrate the invention, and are not intended to, nor should they be interpreted to, limit the scope of the invention.

**Examples**

Example 1: Example architecture and workflow

Figure 1 illustrates an example architecture and workflow 100 according to the present invention intended for application testing. A user 11 interacts with the application which comprises a graphical user interface (not shown). To this end, the user 11 employs a user device (not shown), preferably a smartphone, tablet, personal computer, laptop or desktop, to enter instructions via a keyboard and/or touchscreen and/or computer mouse and/or other human interface device (HID).

By interacting with the application via said graphical user interface, the user 11 generates 12 a session 13 comprising one or more user actions 15. This session is recorded 1 by the system. Hereby, each of the actions 15 may be illustrated by a circle. Such an action may for instance relate to the selection of an item on the screen, pushing a button, entering information in a field provided by the application, etc. Within the constraints of possible action sequences allowed by the application, the human user 11 decides by himself/herself how and when to move from one action to the next. The session 13 hence may comprise, apart from user actions 15, also other information regarding the session, such as the time between actions and/or detailed parameters relating to the actions. Preferably, the session 13 is directed at a single user 11 but no information is captured for uniquely identifying the user 11 further on, since this is not required for the invention to work and furthermore may be undesirable in view of privacy issues.

To record 1 the session 13, an input interface module 14 may be provided. A preferred embodiment for this module 14 is discussed in Example 2. A preferred embodiment of data representation of a session 13 is discussed in Example 3.

In a next step, the data of the session 13 is stored in a joint database 23, together with data of a plurality of other sessions 13 from one or more users 11 (not shown). Then, clustering 2 is performed on said plurality of sessions 13 into a plurality of categories 21, thereby generating for each category 21 a corresponding bot brain model 22 comprising actions 25 corresponding to nodes 25 and edge probabilities $\alpha, \beta, \gamma, \delta$ corresponding to directed edges 24. In a preferred embodiment, there is a direct relation between the user actions 15 and the actions 25 comprised in the bot brain model 22. This however need not be the case, since e.g. the bot brain model 22 may comprise auxiliary actions 25 introduced for formal modelling reasons, e.g. a universal start action. Likewise, the sessions 13 may comprise actions which have been carried out by the user 11 but may be ignored for generating the bot brain models 22, e.g. because those actions are out of scope of the testing or they lack relevance to testing purposes. Furthermore, the edge probabilities $\alpha, \beta, \gamma, \delta$ corresponding to directed edges 24 represent a probability that a given action 25 being the starting point of the directed edge 24 is succeeded by another action 25 being the endpoint of the directed edge 24. In one embodiment, the edge probabilities $\alpha, \beta, \gamma, \delta$ may relate to a histogram of common edges 24 found in the data of the sessions 13, whereby edges for which more instances are found in the data of the sessions 13 receive a larger edge probabilities $\alpha, \beta, \gamma, \delta$, while edges for which no instances are found may receive a very small value or a value of zero for the corresponding edge probability $\alpha, \beta, \gamma, \delta$. Preferred embodiments for said clustering is given in Examples 4 and 5.

The clustering eventually leads to established bot brain models 22, each corresponding to a separate category 21. In a next step, for each bot brain model, at least one bot 41 is created 3. The exact number of bots 41 to be created for each category 21 may be chosen automatically, e.g. with a single bot 41 per category 21. Alternatively, the number of bots 41 for each category 21 may be chosen such that the expected time until visiting of each possible edge by the bot population 4 as a whole is minimized. In another embodiment, parameters relating to the clustering 2, the resulting bot brain models 22 and the creation 3 of bots 41 may be viewed via an analysis console 26 provided to a human operator. In a related embodiment, parameters relating to the clustering 2, the resulting bot brain models 22 and the creation 3 of bots 41, such as the number of categories 21 and the number of bots to be created per category 21 may be edited via an admin console 31 provided to a human operator with administrator rights.

After creation 3 of the bots 41 they are added to the bot population 4. The bot population 4 is maintained by the system via a separate thread, comprising the repeatedly generating 42, for each bot 41 belonging to said bot population 4, a sequence 43 of bot interactions between the bot 41 and the application, preferably via said graphical user interface.

The generated sequence 43 comprises at least a first action 25 and a second action 25. The repeatedly generating 42 of said sequence 43 by said bot 41 involves a probabilistic evaluation based on the edge probabilities $\alpha$,

β, γ, δ comprised in the bot brain model 22 associated with said bot 41. Hereby, the sequences of action may be drawn preferably from a histogram or equivalently, some probability density function or cumulative distribution function associated with each edge. Such an approach allows aggregation across different users 11, losing specificity to a single user 11, while generating behavior for the bots 41 that is still realistic in view of the application.

In a preferred embodiment, the bots 41 do not live forever. Preferably, the repeatedly generating of a bot interaction (42) comprises evaluating, for each bot 41, whether an expiry condition for the bot 41 has been reached. Hereby, meeting said expiry condition corresponds to letting said bot 41 die. This may be a simple age criterion, wherein the performing of an action results in a decrease of a residual lifetime counter by 1 unit. Alternatively, this may be more advanced, particularly when the bot brain models are continuously updated. In such a case, said expiry condition may relate to a difference between a bot brain model 22 that is currently in use for creating 3 bots 41 and the bot brain model 22 used for creating the bot 41. Example 5 discusses a preferred embodiment for expressing such differences. The bot population may be monitored by a human operator via a view console 44. Test results 51 may be derived 5 from the bot population.

Example 2: Input interface module example

This example discusses an input interface module 14 that may be used e.g. in the embodiment of Example 1 to record 1 the session 13 as illustrated by Figure 1. To this end, the input interface module 14 comprises a generic input module 19, an APM input module 16 and an application input module 17. The input interface module 14 works together with an output queue 18. The goal of the input interface module 14 is to gather data from different sources, and to modulate it into a structure that is readable for further use, i.e. clustering of sessions and/or updating of system parameters such as the parameters of the bot brain models 22.

The gathered data may be structured according to a plurality of base-classes. Thereby, each of the generic input module 19, an APM input module 16 and an application input module 17 may preferably process sessions and actions in parallel and may operate on a subset of the base-classes, and enrich the data if needed. A preferred embodiment is discussed in Example 3.

The generic input module 19, preferably a java module, is a generic superstructure to the common behavior. It serves to processing a session and putting it on the queue to be processed by the next step.

The APM input module 16 gathers data from an application performance management system (APM). An example of such a system is Dynatrace. The APM is responsible for sending the data in a structured way. The data that is sent may for instance, in the case of Dynatrace, consist of 'visits' and 'actions'. A visit is the Dynatrace equivalent for a session; while the action is the actual action the user executes on the GUI of the application. The actions can e.g. consist of page-loads; clicks; scrolls. The data coming from the APM may be structured according to a separate APM base-class.

The application input module 17 is connected directly to the application at hand and may even be partially or fully integrated with it. Preferably a separate base-class may be associated to it.

The input interface module 14 may comprise further modules (not shown) for input processing, preferably according to separate other classes. This may for instance relate to site/application analytics of usage or security-related monitoring, e.g. risk-based monitoring with behavioral biometrics.

After bringing together the data, the generic input module 19 should present data according to sessions 13 containing a number of actions 15 that contain one or more parameters.

In a preferred embodiment, the sessions 13 arrive in the queue formatted as JSON strings. An example string for a session is the following.

```
{
    "type": "Touch",
    "actions": [
        {
            "name": "click on
\"goTo('/touch0501')\"",
            "parameters": [
                {
                    "name": "screenId",
```

```
                    "Value":
                    "https://example.be/TCH/A044/
                    resources/0001/fr/app/#/appname0101"
                  }
                ]
              },
              {
                "name": "click on
              \"goTo('/touch0501')\"",
                "parameters": [
                {
                "name": "screenId",
                "Value":
                "https://example.be/TCH/A044/
              resources/0001/nl/app/#/appname0101"
                  }
                ]
              }
            ]
          }
```

Example 3: Session representation

A session comprises an ordered sequence of actions. An action may have a variable amount of parameters. A session may be mapped to a numerical vector representation, also called "tensor" hereafter. A tensor is constructed by counting occurrences of actions and sequences of actions (a sequence also being called "n-gram" hereafter) in the session based on a vocabulary. The vocabulary may be extended during the count. N-grams occurring in each of a pair of sessions indicates a larger similarity between the sessions. A tensor may also represent a numeric parameter value associated with an action. Preferably, numeric parameter values receive a lower total weight. Preferably, a numeric parameter value associated with a parameter of an action is represented in the tensor based on a rank order over multiple parameter values associated with the parameter of the action in the plurality of sessions.

Exemplary session 1 may comprise:

action_1 (parameter_1.1="ABC"; parameter_1.2="1") $\rightarrow$
action_2 (parameter_2.1="5") $\rightarrow$
action_3 (no parameters) $\rightarrow$
action_4 (no parameters) $\rightarrow$
action_5 (no parameters).

Exemplary session 2 may comprise:

action_1 (parameter_1.2="4"; parameter_1.3="ABCD") $\rightarrow$
action_2 (parameter_2.1="3.9") $\rightarrow$
action_3 (no parameters) $\rightarrow$
action_3 (no parameters) $\rightarrow$
action_6 (no parameters).

An exemplary vocabulary may be constructed based on session 1 (items 1 to 12 below), and later augmented based on session 2 (additional items 13 to 17 below), thereafter comprising:

1. action_1
2. action_2
3. action_3
4. action_4
5. action_5
6. action_1 → action_2 → action_3
7. action_2 → action_3 → action_4
8. action_3 → action_4 → action_5
9. action_1 → action_2 → action_3 → action_4
10. action_2 → action_3 → action_4 → action_5
11. action_1: parameter_1.2
12. action_2: parameter_2.1
13. action_6
14. action_2 → action_3 → action_3
15. action_3 → action_3 → action_6
16. action_1 → action_2 → action_3 → action_3
17. action_2 → action_3 → action_3 → action_6

An exemplary tensor for the first session may be:
(1, 1, 1, 1, 1, 1, 1, 1, 1, 1, 0.050, 0.050)
An exemplary tensor for the second session may be:
(1, 1, 2, 0, 0, 1, 0, 0, 0, 0, 0.066, 0.033, 1, 1, 1, 1, 1)
Because the tensor of the first session has been constructed with limited vocabulary (items 1 to 12), it is shorter. Additionally, each of the values for parameter_1.2 and parameter_2.1 have normalized rank order 1 / 1 = 1.0, as no other occurrences of these parameters have been detected yet. These normalized rank orders are weighted to comprise a summed weight of 0.1 in the tensor for the first session.
Because the vocabulary has been extended based on the second session (containing items 1 to 17), the tensor of the second session is longer. For the second session, parameter_1.2 comprises rank order 2 as "4" is larger than "1", and parameter_2.1 comprises rank order 1 as "3.9" is smaller than "5". The rank orders are normalized based on the total number of occurrences of the parameter of the action over the plurality of sessions, yielding 2 / 2 = 1.0 for parameter_1.2 and 1 / 2 = 0.5 for parameter_2.1. These normalized rank orders are then weighted to comprise a summed weight of 0.1 in the tensor for the second session.

Exemplary session 3 may be:

action_1 →

action_1 →

action_1.

Exemplary session 4 may be:

action_1 →

action_1 →

action_1 →

action_1 →

action_1 →

action_1.

Exemplary session 5 may be:
action_2.

Based on the vocabulary:

1. action_1
2. action_1 → action_1 → action_1
3. action_1 → action_1 → action_1 → action_1
4. action_2

a tensor for the third session is (3,1,0), a tensor for the fourth session is (6,4,3), and a tensor for the fifth session is (0,0,0,1).

The tensors of the third and fourth sessions comprise a Euclidean distance of 3.31 and the tensors of the third and fifth sessions comprise a Euclidean distance of 5.19, contrary to the larger similarity between the third and fourth sessions than between the third and fifth sessions. Where necessary, a tensor may be extended with trailing zeroes, or may be assumed to comprise trailing zeroes, for comparison purposes. For example, the tensor for the third session may be extended to (3,1,0,0) for comparison with the tensor for the fifth session.

A better comparator is the cosine similarity. This measures the difference in angles between those points. A good and much faster alternative is the distance measure of normalized points (projections on the Euclidean sphere).

The tensor of session 3 gets normalized to (0.94, 0.31, 0.00).

The tensor of session 4 gets normalized to (0.77, 0.51, 0.38).

The tensor of session 5 gets normalized to (0.00, 0.00, 0.00, 1.00).

The normalized tensors of the third and fourth sessions comprise a Euclidean distance of 0.46 and the tensors of the third and fifth sessions comprise a Euclidean distance of 1.41, corresponding to the larger similarity between the third and fourth sessions than between the third and fifth sessions.

Example 4: Specification of an exemplary clustering algorithm

while(new session input):

- Step 1: tensor T = map(new session input) [e.g. according to example 3]
- Step 2: adjust_model(tensor, clusters $C = (c_1, c_2, ..., c_n)$):

  ○ retrieve $c_i$ in C for which distance($c_i$, tensor) is minimal [e.g. distance according to example 3]
  ○ if distance($c_i$, tensor) > marker:

  - $C = (c_1, c_2, ..., c_n, tensor)$ [i.e. additional cluster]
  - i = n + 1

  else:

  - $c_i = c_i + (tensor - c_i) / c_i.weight$

  ○ $c_i.weight = (c_i.weight + 1) * learning\_factor$

- Step 3: sessions $S = (s_2, ..., s_m, tensor) = tail(S = (s_1, s_2, ..., s_m), tensor)$
- Step 4: find_closest_clusters(S, C):

  ○ for all $s_i$ in S:

  - find $c_j$ in C for which distance($c_j$, $s_i$) is minimal
  - $s_i.cluster = c_j$

- Step 5: pivot_sessions_to_clusters(S, C):

  ○ $c_i$ in C contains $s_j$ of S if $s_j.cluster = c_i$

- Step 6 : update_behavior_model(C)

Example 5: Clustering example

This example is preferably but not necessarily combined with Example 1. This example is preferably but not necessarily combined with Example 2. This example is preferably but not necessarily combined with Example 3. This example is preferably but not necessarily combined with Example 4, and may elaborate upon the various steps disclosed therein.

In this example, "visits" and "sessions" are again used interchangeably, and reference signs refer to Figure 1. Furthermore, the terms "cluster" and "category" are used interchangeably.

This example relates to a preferred embodiment wherein initial clustering may have taken place, and further sessions 13 may be added to the existing clusters/categories 21, whereby the existing clusters/categories 21 may be updated. Particularly, this may relate to:

- recording 1 a further session 13 comprising one or more user actions 15 generated by a user 12 while interacting with said application;

- assigning one of said plurality of categories 21 to said further session 13 based on a similarity between said further session 13 and each of the bot brain models 22 associated with said plurality of categories 21;

- determining a difference between said further session 13 and the bot brain model 22 of the assigned category 21;

- updating, based on said difference, the bot brain model 22 of the assigned category 21;

- preferably, creating 3 a further bot 41 associated with the updated bot brain model 22 and adding said further bot to said bot population 4.

This may furthermore in particular relate to:

- recording a further session comprising one or more user actions generated by a user while interacting with the application;
- obtaining a normalized numerical vector representation for the further session and a numerical vector representation for each of the plurality of categories;
- computing a distance between the numerical vector representation of the further session and the numerical vector representation of each of the plurality of categories;
- determining the category associated with a minimal computed distance over the plurality of categories;
- verifying a condition based on the minimal computed distance and a predefined distance threshold;
- selecting based on the verification to either create a new category based on the further session or to assign the further session with the determined category associated with the minimal distance;
- in case the further session is assigned with the determined category associated with the minimal distance:

  ◦ determining a difference between the further session and the bot brain model of the assigned category;
  ◦ updating, based on the difference, the bot brain model of the assigned category;

- preferably, creating a further bot associated with the updated bot brain model and adding the further bot to the bot population.

Clustering 2 comprises converting from individual sessions 13 to clusters of behavior. The clustering itself has a model of the existing clusters; and for each further session 13 coming in, it will decide to which cluster it will add this visit. Hereby, a common behavior needs to be gathered. This is not the same as exact the same behavior, since this would not enable to model common concepts in it. This is also not the same as random cluster generation, because then there is no value in the clusters. Therefor the clustering 2 into categories 21 comprises many aspects.

To initialize the clustering 21, a predefined strategy is used to select the most appropriate cluster. The strategies should exist independently, and also should be extendable.

The clusters are stored in a database 23, preferably a graph database handled by means of a graph database management system.

In **step 1,** a numerical vector representation ("tensor") T is determined for the session. The tensor comprises a counter per action, and certain subsequences of actions ("n-grams"). The tensor representing said session is interpretable to a vocabulary representing features based on past sessions. This vocabulary may be extended over time, based on new sessions. An exemplary embodiment is discussed in Example 3.

In **step 2,** for each cluster a representation centroid $c_i$ is obtained, which may have been precomputed. A distance of the tensor determined in step 1 to each of the cluster representation centroids is determined. The cluster corresponding to the minimal of said distances is retrieved. Herein, the distance is preferably a Euclidean distance between the normalized tensor and the normalized cluster representation centroid. The normalization corresponds to a projection onto the Euclidean sphere with unit radius. This distance is inversely proportional to the cosine measure of two vectors in the n-dimensional space. An exemplary embodiment of this distance measure is discussed in Example 3.

Once a cluster with minimal distance is retrieved, the distance also provides a good indication of similarity between the newly added session and the existing cluster, represented by the cluster centroid:

- If the similarity is too small, i.e. the distance too large, exceeding a predetermined threshold "marker", a new cluster is created with a representation centroid positioned at the normalized tensor of the new session.
- If the similarity is good enough, we add the session to said cluster, thereby migrating the cluster centroid. The migrated cluster representation centroid is a replacement for the original cluster representation centroid. The cluster representation centroid is migrated over a product of the inverse of a weight $c_i$.weight of the retrieved cluster and the difference of the normalized tensor of the new session and the cluster representation centroid $c_i$.

A cluster weight $c_i$.weight is updated based on an increment of the previous cluster weight with a weight (of 1) attributed to the new session, and a learning factor "learning_factor". The learning factor influences how much a cluster may be moved by new sessions streaming in. In a preferred embodiment, the learning function evolves from an initial learning factor to a final learning factor based on a learning decay parameter.

The migrated cluster centroid may or may not be renormalized, i.e. projected onto the Euclidean unit sphere. A newly generated centroid of a cluster may not be on the Euclidian sphere. Renormalization consumes computational resources, and has been found to have little to no influence on finding the nearest centroid. It is therefore not considered mandatory. It has however an influence on the said distance measure that gives a good indication of the similarity. Therefore it is considered good practice to allow the renormalization if the system is small enough for the algorithm to handle the extra calculations. This is fully dependent on the application that is considered.

At the start of the clustering, few cluster centroids are available, and it is hard to distinguish similarity and difference measures with only a few sessions to be compared. It can coincidentally happen that the first sessions considered are all in the same behavior pattern that has to be found. Therefore the algorithm comprises a start-up phase where the first batch of sessions are considered as non-streaming, and the different clusters can be calculated taking into consideration all sessions of this first batch.

The algorithm is configured to maintain a manageable number of clusters. Too many clusters will lead to too much individual behavior, and is not manageable. Too few clusters get cluttered, and are undefinable to a certain behavior pattern. The algorithm may or may not comprise one or more of the following:

- The distance threshold ("marker") for addition of a session to a cluster is at most $\sqrt{2}$. A session may not be included in a cluster comprising no resemblance to the session. This is the case for orthogonal normalized numerical vector representations, e.g. (a, 0) and (0, b), having a distance of $\sqrt{2}$.
- Clusters with limited affiliation to a feature of the system, e.g. an intended and for proper use unavoidable action, receive zero weight. The algorithm is configured to create new clusters for sessions with little resemblance of existing clusters. This causes the algorithm to continue its speed, even if a large number of dimensions are added.
- Adjustment by a human operator of the minimum number of actions and the maximum number of actions for "n-grams". In Example 3, for example, the minimum may have been set to three and the maximum to four.
- Microloops with high recurrence number, e.g. with a recurrence above a predefined threshold, are not taken up in the vocabulary.

In **step 3,** a certain amount of added sessions, based on a predefined history size, is kept to update the behavior model.

After a certain amount of new sessions have been added, i.e. after a predetermined batch size of new sessions are streamed in, the kept sessions are associated to the clusters in **steps 4 and 5,** which may be necessary as the clusters may move in between, and the bot brain models are updated based on the associated sessions in **step 6.** The batch size avoids too many recalculations of the bot brain models.

In a preferred embodiment, an aging principle is involved in the updating. Edges that are often used should become stronger, edges that are not used for a while should become weaker. There are several possible strategies to accomplish that. In a preferred embodiment, a weight variable $\alpha, \beta, \gamma, \delta$ is associated with each edge 24 of the bot brain model 22, which enlarges for each occurrence in a further session 13. Conversely, this weight may be lowered whenever a session 13 is added without passing a certain edge 24. This may relate an embodiment wherein said updating relates to an aging function applied to said edge probabilities $\alpha$, $\beta$, $\gamma$, $\delta$, wherein said aging function is such that values of edge probabilities $\alpha$, $\beta$, $\gamma$, $\delta$ of edges present in said further session 13 are increased and/or is such that values of edge probabilities $\alpha$, $\beta$, $\gamma$, $\delta$ of edges absent in said further session 13 are decreased. The aging mechanism in the preferred embodiment is as such that, for aging, we lower the strength of an edge. The strength is the combination of weight and age. We don't adjust the weight anymore, but we increase the age. Once the weight reached a certain threshold, edges are removed from the representation of the behavior pattern. Actions that are no longer reachable by any edges, are also removed, and a cascade can lead to the removal of more edges and action from the representation of the user behavior pattern.

Furthermore, in a preferred embodiment, also an 'unused time' variable is associated to each edge 24 and action/node 25, so that when actions 25 or edges 24 are no longer appropriate, they are not kept. In other words, actions 25 that were very often executed in the past may have built up a big weight, but this should decrease sufficiently fast if they have become obsolete. This may relate to relate to an unused-age counter associated with each of said directed edges 24, wherein the unused-age counter of edges present in said further session 13 is set to zero, wherein the unused-age counter of edges absent in said further session 13 is increased by one, and wherein said updating comprises removing edges based on said unused-age counter exceeding a predetermined unused-age threshold.

All of the above relates to the action the user 11 is taking. Another consideration is how to handle the data of the customer, which may be strictly private information. In this regard, the invention advantageously allows avoiding the storage of user-specific data, by monitoring sessions rather than user profiles. The data provided by the user 13 is thereby stored as a probability-related measure, in this context referred to as "probit" (probability unit). This relates to a common class of data, containing a function to retrieve a probable data point for a certain case. This may be understood for instance from the example of a European transfer transaction performed with the application. Say data is collected from 1000 visits doing a transaction. The amount of the transaction will vary. Rather than storing individual user 13 data, a histogram is kept of the transaction amount. Correspondingly, a bot 41 that is executing this transaction will pick a random value from this histogram, which is hence used as a probability density function. Frequently occurring amounts will be picked up more often, but also the extremes will be picked occasionally. Preferably, such a histogram-based approach is used for all variables comprised in the cluster/category 21.

In a further preferred embodiment, relational probability variables may be introduced. One example may relate to said European transfer transaction example. Assume that at night, the chances are higher to execute a European transfer of 10 EUR, while during daytime, 500 EUR is more likely. In such an embodiment, correlation is present in the model between hour of the day and the transfer transaction amount, which may be modeled by means of multidimensional probability density functions and/or one-dimensional density functions conditioned on independent variables.

In a further preferred embodiment, data may be linked, and said actions comprise so-called linked actions. Linked actions may occur e.g. where the answer to a question being true or false leads to a different next action. For instance, if one opts for 'known beneficiary' in the application while handling a European transfer transaction, the application will not require the user to fill in the IBAN of the beneficiary, while the opposite holds true if the beneficiary is unknown.

From the established bot brain models 22, which may or may not have been updated based upon the most recent further session 13, one may generate one or more bots 41. This may be done manually by means of an admin console 31 provided to a human operator with administrator rights. Furthermore, this admin console 31 may allow to let bots 41 die or to retrieve information regarding exceptions and/or errors detected. The following is a list of possible instructions which may be provided via said admin console 31:

- Get the list of running bots
- Stop the bot when the last action finishes (safe)
- Kill the bot thread (unsafe)
- Get the bot details including a list of actions
- Get the current action being executed by the bot as an id (long) value.
- Start a random bot population based on the given parameters (*)
- Start a bot population based on the given parameters that follow the path with the highest weight (*)
- Start a random bot population based on the given parameters that follow the path with the lowest weight (*)
- Start a random bot population based on the given parameters that follow the path with the lowest age (*)
- Start a random bot population based on the given parameters that follow the path with the highest age (*)
- Return coverage info for the action with the selected id. The info consists of 3 fields:

  ∘ totalExecutions. Number of executions of the action.
  ∘ totalExceptions. Number of exceptions.
  ∘ lastExceptions. Array with the description of the lasts exceptions info.

- Return coverage info for the cluster with the selected root node id. It returns a 'map' with all the actions in the cluster and its coverage info.
- Input session object in JSON format
- Set the branching factor for the clustering algorithm
- Set the threshold for creating clusters
- Display details (threshold, branching factor) of a session pending to finish. A list of actions received for that session is included.

(*) The starting of the bots can also be implemented as an automated service for the continuous minimum distribution of a certain amount of bots.

**Claims**

1. Computer-implemented method for testing an application comprising a graphical user interface, said method comprising the steps of:

   - recording (1) a plurality of sessions (13), each session (13) comprising one or more user actions (15) generated (12) by a user (12) while interacting with said application via said graphical user interface;
   - clustering (2) said plurality of sessions into a plurality of categories (21), thereby generating for each category (21) a corresponding bot brain model (22) comprising actions (25) corresponding to nodes (25) and edge probabilities ($\alpha$, $\beta$, $\gamma$, $\delta$) corresponding to directed edges (24);
   - creating (3) at least one bot (41), preferably at least two bots (41), wherein each bot (41) is associated with one of the bot brain models (22);
   - adding said at least one bot (41), preferably said at least two bots (41), to a bot population (4);

   the method comprising the further step of:

   - repeatedly generating (42), for each bot (41) belonging to said bot population (4), a sequence (43) of bot interactions between the bot (41) and the application, preferably via said graphical user interface;

   wherein said sequence (43) comprises at least a first action (25) and a second action (25), and wherein said repeatedly generating (42) of said sequence (43) by said bot (41) involves a probabilistic evaluation based on the edge probabilities ($\alpha$, $\beta$, $\gamma$, $\delta$) comprised in the bot brain model (22) associated with said bot (41).

2. Method according to preceding claim 1, wherein said probabilistic evaluation is based on the edge probability ($\alpha$, $\beta$, $\gamma$, $\delta$) of the directed edge (24) leading from said first action (25) to said second action (25) as comprised in the bot brain model (22) associated with said bot (41).

3. Method according to any one of the preceding claims, said method comprising the further steps of:

   - recording (1) a further session (13) comprising one or more user actions (15) generated by a user (12) while interacting with said application;
   - assigning one of said plurality of categories (21) to said further session (13) based on a similarity between said further session (13) and each of the bot brain models (22) associated with said plurality of categories (21);
   - determining a difference between said further session (13) and the bot brain model (22) of the assigned category (21);
   - updating, based on said difference, the bot brain model (22) of the assigned category (21);
   - preferably, creating (3) a further bot (41) associated with the updated bot brain model (22) and adding said further bot to said bot population (4).

4. Method according to preceding claim 3, wherein said updating relates to an aging function applied to said edge probabilities ($\alpha$, $\beta$, $\gamma$, $\delta$), wherein said aging function is such that values of edge probabilities ($\alpha$, $\beta$, $\gamma$, $\delta$) of edges present in said further session (13) are increased and/or is such that values of edge probabilities ($\alpha$, $\beta$, $\gamma$, $\delta$) of edges absent in said further session (13) are decreased.

5. Method according to any one of the preceding claims 3 and 4, wherein said updating relates to an edge strength associated with each of said directed edges (24), an edge strength of an edge based on an unused-age counter of the edge and the edge probability of the edge, wherein the unused-age counter of an edge present in said further session (13) is reset, wherein the unused-age counter of an edge absent in said further session (13) is incremented, and wherein said updating comprises removing edges based on a comparison of said edge strength with a predetermined strength threshold.

6. Method according to any one of the preceding claims 1 to 5, wherein said step of repeatedly generating (42) said sequence (43) of bot interactions for each bot (41) belonging to said bot population (4) takes place also if the bot brain model (22) corresponding to said bot (41) is no longer in use for creating (3) bots (41).

7. Method according to any one of the preceding claims 1 to 6, wherein said repeatedly generating of a bot interaction (42) comprises evaluating, for each bot (41), whether an expiry condition for the bot (41) has been reached, wherein meeting said expiry condition corresponds to letting said bot (41) die, wherein preferably said expiry condition relates to a difference between a bot brain model (22) that is currently in use for creating (3) bots (41) and the bot brain model (22) used for creating the bot (41).

8. Method according to any one of the preceding claims 1 to 7, wherein said step of creating (3) at least one bot (41) comprises creating at least two bots (41) of which at least two (41) are created from the same corresponding bot brain model (22).

9. Method according to any one of the preceding claims 1 to 8, wherein said step of creating (3) at least one bot (41) comprising creating at least two bots (41) of which at least two (41) are created from a different corresponding bot brain model (22).

10. Method according to any one of the preceding claims 1 to 9, wherein said bot population (4) comprises at least five bots (41), preferably at least ten bots, more preferably at least twenty bots.

11. Method according to any one of the preceding claims 1 to 10, wherein said step of clustering (2) comprises the step of determining a similarity between a pair of sessions (13) via:

   - obtaining a numerical vector representation for each session of the pair;
   - normalizing the numerical vector representations;
   - computing a distance between the normalized numerical vector representations; and
   - verifying a condition based on the computed distance and a predefined distance threshold.

12. Method according to preceding claim 11, wherein a numerical vector representation of a session is based on at least one of, preferably at least two of:

   - a number of occurrences of an action in the session; and
   - a number of occurrences of a sequence of actions in the session.

13. Method according to any one of the preceding claims 1 to 12, said method comprising the further step of:

   - repeatedly determining (5), for each bot (41) belonging to said bot population (4) and based on said sequence (43) of bot interactions between the bot (41) and the application, a test report (51) for said bot (41);
   - based on said test report (51), sending an alert to a human operator;

   wherein said sending of said alert is preferably triggered by an error comprised in said test report.

14. System for testing an application comprising a graphical user interface, said system comprising:

   - a server comprising memory, a processor, program code on said memory for instructing said processor;
   - at least one user device comprising memory, a processor, program code on said memory for instructing said processor;

   wherein the at least one user device is configured for executing said application, said executing comprising interaction between a user (11) of said user device and
   said application via said graphical user interface of said application, said executing comprising sending a session (13) comprising one or more user actions (15) generated (12) during said interaction to said server;
   wherein said server is configured for

- recording (1) a plurality of sessions (13) received from said at least one user device, each session (13) comprising one or more user actions (15) generated (12) by a user (12) while interacting with said application;
- clustering (2) said plurality of sessions into a plurality of categories (21), thereby generating for each category (21) a corresponding bot brain model (22) comprising actions (25) corresponding to nodes (25) and edge probabilities ($\alpha$, $\beta$, $\gamma$, $\delta$) corresponding to directed edges (24);
- creating (3) at least one bot (41), preferably at least two bots (41), wherein each bot (41) is associated with one of the bot brain models (22);
- adding said at least one bot (41), preferably said at least two bots (41), to a bot population (4);

wherein the server is further configured for

- repeatedly generating (42), for each bot (41) belonging to said bot population (4), a sequence (43) of bot interactions between the bot (41) and the application;

wherein said sequence (43) comprises at least a first action (25) and a second action (25), and wherein said repeatedly generating of said sequence (43) by said bot (41) involves a probabilistic evaluation based on the edge probabilities ($\alpha$, $\beta$, $\gamma$, $\delta$) comprised in the bot brain model (22) associated with said bot (41).

15. System according to claim 14, said system further comprising:

- an application server different from said server, said application server comprising memory, a processor, program code on said memory for instructing said processor;

wherein said executing comprises sending said session (13) to said application server for executing said application; wherein the application server is configured for sending said session (13) comprising one or more user actions (15) generated (12) during said interaction to said server.

Figures

Fig. 1

Europäisches
Patentamt
European
Patent Office
Office européen
des brevets

## EUROPEAN SEARCH REPORT

Application Number

EP 18 21 3693

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | HUNT CHRIS J ET AL: "Automatic Testing of Natural User Interfaces", 2014 IEEE SEVENTH INTERNATIONAL CONFERENCE ON SOFTWARE TESTING, VERIFICATION AND VALIDATION, IEEE, 31 March 2014 (2014-03-31), pages 123-132, XP032599505, DOI: 10.1109/ICST.2014.25 [retrieved on 2014-05-30] * section II-B, sections III,IV,IV-B * | 1-15 | INV. G06F11/36 |
| A | US 9 235 412 B1 (COHEN YOSSI [IL] ET AL) 12 January 2016 (2016-01-12) * abstract * * paragraphs [0093] - [0100], [0111] - [0114] * * figure 1 * | 1-15 | |

TECHNICAL FIELDS
SEARCHED      (IPC)

G06F

The present search report has been drawn up for all claims

| Place of search | Date of completion of the search | Examiner |
|---|---|---|
| The Hague | 6 June 2019 | Sabbah, Yaniv |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

................................................................

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 18 21 3693

This annex lists the patent family members relating to the patent documents cited in the above-mentioned European search report.
The members are as contained in the European Patent Office EDP file on
The European Patent Office is in no way liable for these particulars which are merely given for the purpose of information.

06-06-2019

| Patent document cited in search report | Publication date | Patent family member(s) | Publication date |
|---|---|---|---|
| US 9235412 B1 | 12-01-2016 | NONE | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 0869433 A

**Non-patent literature cited in the description**

- **P.A. BROOKS ; A.M. MEMON.** Automated GUI Testing Guided by Usage Profiles. *Proceedings of the 22nd IEEE/ACM international conference on Automated software engineering (ASE 07),* 05 November 2007, 333-342